# EUROPEAN PATENT SPECIFICATION

(11) **EP 1 577 227 B1**
(45) Date of publication and mention of the grant of the patent: **07.06.2006**
(21) Application number: 04005801.8
(22) Date of filing: 11.03.2004
(51) Int. Cl.: B65D 81/32, A61C 5/06, A61M 5/315

(54) **Capsule for storage, mixing and dispensing materials**
Kapsel zur Lagerung, Mischung und Ausgabe von Materialien
Capsule pour le stockage, le mélange et la distribution des matériaux

(43) Date of publication of application: 21.09.2005
(73) Proprietor: 3M ESPE AG, 82224 Seefeld (DE)
(72) Inventor: Peuker, Marc, 86938 Schondorf (DE); Hohmann, Arno, 81369 München (DE)
(74) Representative: Vossius & Partner

(56) References cited:
- DE-U- 9 209 105
- FR-A- 2 131 809
- GB-A- 1 300 163
- US-A- 2 665 690
- US-A- 3 537 605
- US-A- 3 756 390
- US-A- 3 831 742
- US-A- 3 860 114
- US-A- 4 136 775

## Description

### Field of the invention

The present invention relates to a capsule for storage, mixing and dispensing of materials, preferably dental materials, most preferably glass ionomer cements. In particular, the present invention relates to a capsule for storage, mixing and dispensing materials which preferably consist of a plurality of, i.e., two or more components.

### Background of the invention

Mixing capsules which are filled with the components in separate chambers by the manufacturer are used to produce mixtures of two or more components. The components are brought into communication and mixed with one another by the user, for example by destroying a wall separating the chamber.

Mixing capsules for the production of dental materials which are often mixed from a pulverulent component and a liquid component, the mixing procedure usually taking place in a shaker unit, are known in the dental sector. The completely mixed substance is then dispensed directly onto the working area, for example into a tooth cavity, through a dispensing spout formed integrally on the mixing capsule.

DE-A-36 35 574 discloses a mixing capsule intended for the production of jointing and sealing compounds. In an illustrative embodiment described in said document, an auxiliary chamber which is present in the dispensing piston is delimited, on the side facing the main chamber of the capsule, by a foil and, on the opposite side, by an auxiliary piston which is displaceably arranged in the dispensing piston. In the initial state of the mixing capsule, in addition to the second component, a mixer body is accommodated in the auxiliary chamber, which mixer body initially serves to destroy the foil by means of manual displacement of the auxiliary piston and then assists in the mixing procedure. To allow the reduction in volume which is necessary for displacement of the inner piston together with the mixer body, a gas cushion is provided in the mixing chamber.

In a further embodiment of the known mixing capsule, the mixing body is initially situated in the main chamber. In this case, the auxiliary chamber present in the piston is closed off from the main chamber by means of a cover and on its rear side by a bellows. As a result of manual pressure being applied to the bellows, the cover is pressed away from the piston, so that the two chambers are brought into communication for the purpose of activating the capsule.

In both cases, a dedicated working step which has to be carried out manually is required for activation of the capsule. Furthermore, a gas cushion is required in order to permit the reduction in volume which is required for removal of the cover.

In a multi-component mixing capsule for dental purposes which is known from DE-U-94 00 374, a first component is contained in a mixing chamber and a second, liquid component is contained in a foil bag which is arranged in an auxiliary chamber which is separated from the mixing chamber by a displaceable wall element. A cylindrical mixing body which is present in the mixing chamber is used to displace the wall element at the start of the mixing procedure and thus to compress the foil bag, so that the latter bursts open and releases the liquid component through a liquid passage which is present in the wall element.

US 2003/0136799 discloses a mixing capsule that comprises a cartridge, a dispensing spout and a piston which is displaceably arranged in the cartridge, a sealed main chamber for receiving a first component, an auxiliary chamber which is provided in the piston and receives a second component, at least one freely movable body, and a separating device which separates the auxiliary chamber from the main chamber and through which the body can penetrate. The body is arranged in the main chamber when the separating device closed, and the auxiliary chamber and the body are designed in such a way that, during the dispensing operation, the body can pass into the auxiliary chamber as a displacement body.

FR-A-2 131 809, upon which the preamble of claim 1 is based, discloses a syringe suitable for mixing two substances.

### Summary of the invention

The object of the present invention is to provide an improved capsule for storage, mixing and dispensing of materials that does not require a separate mixing body. This object is solved with the features of the claims.

The present invention provides a capsule for storage, mixing and dispensing of materials according to claim 1. The main chamber comprises a powder material, and the auxiliary chamber preferably comprises a liquid. The applicator and/or the receptacle are adapted such that the receptacle releases material contained in the auxiliary chamber under pressure created by that applicator member when a fluid connection exists between said chambers.

The inner wall of the capsule body member preferably comprises a stepped configuration forming a step in a plane perpendicular to the longitudinal axis of the capsule body member. Preferably, the step divides the interior of said capsule body member into a first part and a second part. The first part is located between the dispensing opening and the second part and has a smaller cross-sectional area than said second part, preferably a smaller diameter than the second part. The receptacle preferably rests on said step.

According to a preferred embodiment, the receptacle comprises an annular element and two film elements that are attached to the annular element at the two sides of the annular element in order to form said auxiliary chamber. Preferably, the inner diameter of the annular element equals the diameter of said first part of said capsule body member. It is also preferred that the two films are attached to said annular element in order to form a hermetically sealed chamber. According to a preferred embodiment, at least one film of said receptacle comprises an area of weakness in order to facilitate breaking of the film upon application of pressure.

The applicator member preferably comprises a piston element and a tubular element accommodating said piston element. The diameter of said piston element preferably equals the diameter of said first part of said capsule body member. Thus, the piston can slide through the annular ring of the receptacle into the first part of the capsule body member.

The applicator member further comprises a punching element, for example, a conical spike.

According to a preferred embodiment, the capsule further comprises a cannula member. Preferably, the cannula member is connected to said dispensing opening or is alternatively integrally formed with said capsule body member. The connected cannula member is preferably rotatable about its longitudinal axis in order to provide a dispensing valve.

The materials preferably comprise dental materials, more preferably glass ionomer cements or resin modified glass ionomer cements.

According to a preferred embodiment of the present invention, the film of the receptacle facing the piston member (i.e., the back-end film of the receptacle) is punched through upon movement of the piston member into the capsule body member. If the piston member is moved further into the capsule body member, the other film of the receptacle (i.e., the front-end film) will burst by hydraulic pressure, and the material, preferably liquid, contained in the auxiliary chamber is pressed into the main chamber. According to a preferred embodiment, at least the front-end film of the receptacle comprises an area of weakness that is formed, for example, by laser engraving, which facilitates breaking of the film along the weakened lines.

In a further preferred embodiment, the piston member comprises a puncture means, for example, a conical spike, as mentioned above. In this case, the back-end film of the receptacle is pierced by the spike but sealed again against the piston member because of the conical geometry of the spike. If the piston member is moved further into the capsule, the back-film will be completely punched through, and at the same time the front-end film of the receptacle is pierced. Due to the hydraulic pressure within the receptacle, the front-end film swells and thus allows liquid to pass through a gap between the spike and the pierced hole in the front end film.

The capsule according to the present invention eliminates the need for a separate activation device. This provides a simplified handling and time saving for the dentist.

Furthermore, the capsule according to the present invention is advantageous because correct activation of the capsule is visible for the dentist which reduces the risk for failures.

It is preferred that additional sealing features are provided separately or in combination at the rear end of the capsule. A first preferred additional sealing feature is formed by a sealing balloon which is attached to the rear end of the tubular element encasing the rear end of the piston element, thus additionally sealing the auxiliary chamber against the exterior of the capsule. The same effect is preferably achieved with a sealing hose that is attached to the rear end of the tubular element and to the rear end of the piston element. Thus, the sealing hose spans the gap between the rear end of the tubular element and the rear end of the piston element. A similar sealing hose is preferably used to provide an additional seal between the body member and the tubular element. This sealing hose spans the gap between the rear end of the body member and the rear end of the tubular element. Alternatively or in addition, another sealing balloon is attached to the rear end of the body member encasing the tubular element and the piston element, thus completely sealing the rear end of the capsule against its exterior. The same effect is achieved with a sealing hose that is attached to the rear end of the body member and to the rear end of the piston element. Thus, the sealing hose spans both the gap between the rear end of the body member and the rear end of the tubular element, and the gap between the rear end of the tubular element and the rear end of the piston element. It should be clear that it is not necessary to provide all of those additional sealing features at the same time. Preferably, at least one of these additional safety features is present.

Preferably, the capsule contains in its main chamber a first, preferably powdery, component of said material to be dispensed, and contains in its auxiliary chamber a second, preferably liquid, component of said material.

According to a second aspect, the present invention provides a kit, comprising at least one of the capsules of the present invention.

According to a third aspect, the present invention provides the use of the capsules of the present invention for mixing a material of two or more components.

The capsule of the present invention does not have conventional burst sachets that require huge burst forces and can therefore be activated without the use of an activator tool. Because the receptacle is formed of an annular element the receptacle can be easily adapted to different volumes by just changing the length of the element. While the maximum volume of burst sachets is limited by various factors that cannot easily be changed within one capsule design, the receptacle of the present capsule allows especially higher volumes to be achieved without major modifications of the capsule.

A further advantage related to the capsule of the present invention is that the entire capsule consists of four components only. This optimises manufacturing processes, and reduces manufacturing costs. In particular, the assembly lines for the assembly of the discharge cannula, a cannula holding cap, the sachets and the sachet holding clamp that are conventionally used can be eliminated completely. Furthermore, filling processes (powder and liquid) can be made in line with the assembly of the four parts.

### Brief description of the drawings

The invention is now described in more detail with reference to the accompanying drawings, in which
- Fig. 1: shows a cross-sectional view of the capsule according to the present embodiment;
- Fig. 2: shows the capsule of Fig. 1 with optional additional sealing features; and
- Fig. 3: shows a cross-sectional view of the activated capsule according to the present invention.

### Detailed description of preferred embodiments

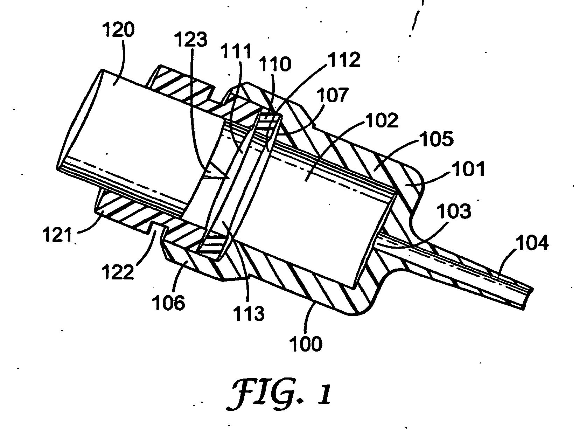

Fig. 1 shows a capsule 100 according to a preferred embodiment of the present invention. Capsule 100 comprises a capsule body member 101 forming a main chamber 102. Capsule body member 101 comprises a dispensing opening 103. In the embodiment shown in Fig. 1, a cannula 104 is integrally formed with the capsule body member.

Capsule body member 101 comprises a stepped configuration so that a step 107 is formed between a first part 105 and a second part 106 of the capsule body member 101. The diameter of the first part 105 is smaller than the diameter of the second part 106. A receptacle comprising an annular member 110 and two films 111, 112 forms an auxiliary chamber 113. The receptacle is located within the capsule body member at step 107. As shown in Fig. 1, the inner diameter of annular element 110 is equal to the diameter of the first part 105 of the capsule body member 101.

Furthermore, capsule 100 of the embodiment shown in Fig. 1 comprises a piston element 120. Piston element 120 has a diameter that is equal to the inner diameter of the annular element 110 of the receptacle and the diameter of first part 105. Piston element 120 is slideably accommodated in a tubular element 121 that, in turn, is (at least in part) accommodated in the second part 106 of the capsule body member 101. Piston element 120 shown in Fig. 1 comprises a conical spike 123 in order to punch through the two films 111 and 112.

Fig. 1 also shows that tubular element 121 comprises an annular groove 122. Annular groove 122 may preferably accommodate a sealing element such as an O-ring.

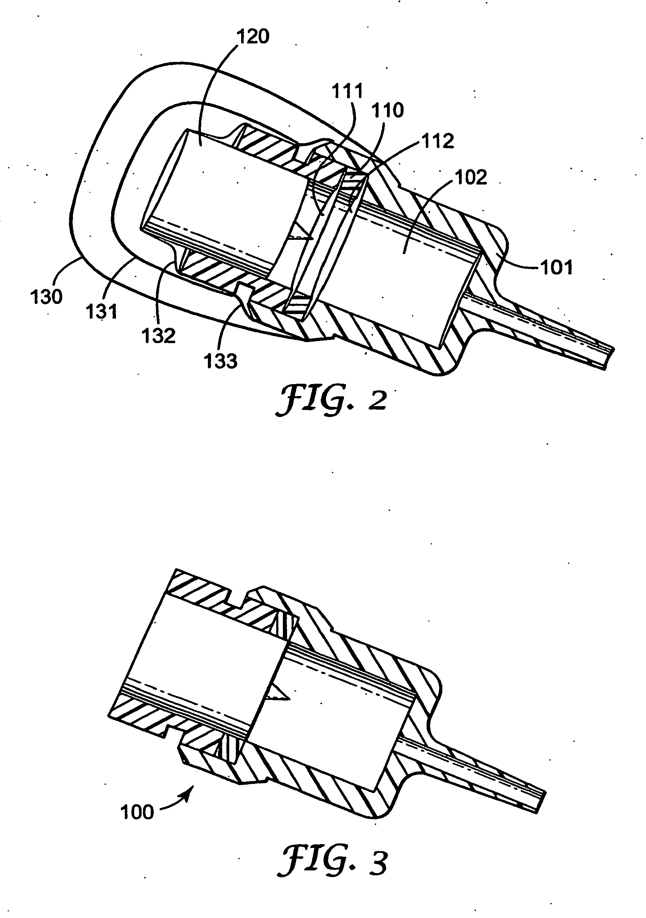

It is preferred that additional sealing features are provided separately or in combination at the rear end of the capsule. These are shown in Fig. 2. A first preferred additional sealing feature is formed by a sealing balloon 131 which is attached to the rear end of the tubular element 121 encasing the rear end of the piston element 120, thus additionally sealing the auxiliary chamber 113 against the exterior of the capsule. The same effect is preferably achieved with a sealing hose 132 that is attached to the rear end of the tubular element 121 and to the rear end of the piston element 120. Thus, the sealing hose 132 spans the gap between the rear end of the tubular element 121 and the rear end of the piston element 120. A similar sealing hose 133 is preferably used to provide an additional seal between the body member 101 and the tubular element 121. This sealing hose 133 spans the gap between the rear end of the body member 101 and the rear end of the tubular element 121. Alternatively or in addition, another sealing balloon 130 is attached to the rear end of the body member 101 encasing the tubular element 121 and the piston element 120, thus completely sealing the rear end of the capsule against its exterior. The same effect is achieved with a sealing hose (not shown) that is attached to the rear end of the body member 101 and to the rear end of the piston element 120. Thus, the sealing hose spans both the gap between the rear end of the body member 101 and the rear end of the tubular element 121, and the gap between the rear end of the tubular element 121 and the rear end of the piston element 120. It should be clear that it is not necessary to provide all of those additional sealing features at the same time. Fig. 2 shows all such safety features at a single capsule just for ease of explanation. Preferably, at least one of these additional safety features is present.

Fig. 3 shows capsule 100 in its activated position with spike 123 being punched through the two films 111 and 112. Thus, the material, for example the liquid contained in auxiliary chamber 113 has already been pressed into main chamber 102. Main chamber 102 preferably contains a powder. The liquid is mixed with the powder and the resulting substance is dispensed through dispensing opening 103 and cannula 104.

### List of Reference Signs

- 100: capsule
- 101: capsule body member
- 102: main chamber
- 103: dispensing opening
- 104: discharge cannula
- 105: first part of capsule body member
- 106: second part of capsule body member
- 107: step
- 110: annular member
- 111: first film
- 112: second film
- 113: auxiliary chamber
- 120: piston element
- 121: tubular element
- 122: annular groove
- 123: spike
- 130: sealing balloon
- 131: sealing balloon
- 132: sealing hose
- 133: sealing hose

## Claims

1. Capsule for storage, mixing and dispensing of materials comprising:
a capsule body member (101) providing a main chamber (102), and comprising a dispensing opening (103) at the front end of said capsule body member;
a receptacle (110) comprising two films (111, 112) forming (113) an auxiliary chamber (113), said receptacle being accommodated in said capsule body member; and
an applicator member (120) for activating said capsule (100) and for dispensing mixed materials; said applicator member being slideably accommodated in said capsule body member, said applicator member being provided at the rear end of the capsule body member;
said main chamber and said auxiliary chamber being selectively connectable for fluid communication between said chambers upon activation of said capsule by said applicator member;
said applicator member and/or said receptacle being adapted such that said receptacle releases material contained in the auxiliary chamber under pressure created by said applicator member.
**characterized in that** said main chamber is adjacent said dispensing opening.

2. The capsule of claim 1, wherein the inner wall of said capsule body member comprises a stepped configuration forming a step (107) in a plane perpendicular to the longitudinal axis of the capsule body member.

3. The capsule of claim 2, wherein said step divides the interior of said capsule body member into a first part and a second part, said first part being located between said dispensing opening and said second part and having a smaller diameter than said second part.

4. The capsule of claims 2 or 3, wherein said receptacle rests on said step.

5. The capsule of any of claims 1 to 4, wherein said receptacle comprises an annular element and two film elements being attached to the annular element at the two sides of the annular element in order to form said auxiliary chamber.

6. The capsule of claim 5, wherein the inner diameter of said annular element equals the diameter of said first part of said capsule body member.

7. The capsule of claim 5 or 6, wherein said two films are attached to said annular element in order to form a hermetically sealed chamber.

8. The capsule of claim 5, 6 or 7, wherein at least one film of said receptacle comprises an area of weakness in order to facilitate breaking of the film upon application of pressure.

9. The capsule of any of claims 1 to 8, wherein said applicator member comprises a piston element (120) and a tubular element (121) accommodating said piston element.

10. The capsule of claim 9, wherein the diameter of said piston element equals the diameter of said first part of said capsule body member.

11. The capsule of any of claims 1 to 10, said applicator member further comprising a punching element.

12. The capsule of claim 11, said punching element being a conical spike (123).

13. The capsule of any of claims 1 to 12, further comprising a cannula member (104).

14. The capsule of claim 13, the cannula member being connected to said dispensing opening or being integrally formed with said capsule body member.

15. The capsule of claim 14, said connected cannula member being rotatable in order to provide a dispensing valve.

16. The capsule of any of claims 1 to 15, wherein said materials comprise dental materials.

17. The capsule of claim 16, wherein said materials are glass ionomer cements or resin modified glass ionomer cements.

18. The capsule of any of the preceding claims, wherein said main chamber contains a first, preferably powdery, component of said material, and said auxiliary chamber contains a second, preferably liquid, component of said material.

19. Kit, comprising at least one of the capsules of any of the preceding claims.

20. Use of the capsules of any of the preceding claims for mixing a material of two or more components.

## Patentansprüche

1. Kapsel zur Lagerung, Mischung und Ausgabe von Materialien, die aufweist:
ein Kapselkörperglied (101), das eine Hauptkammer (102) bereitstellt und am Vorderende des Kapselkörperglieds eine Ausgabeöffnung (103) aufweist;
ein Behältnis (110), das zwei Folien (111, 112) aufweist, die eine Nebenkammer (113) bilden; wobei das Behältnis im Kapselkörperglied untergebracht ist; und
ein Applikatorglied (120) zum Aktivieren der Kapsel (100) und zur Ausgabe der gemischten Materialien; wobei das Applikatorglied verschiebbar im Kapselkörperglied aufgenommen ist,
wobei das Applikatorglied am hinteren Ende des Kapselkörperglieds vorgesehen ist;
wobei die Hauptkammer und die Nebenkammer zur Fluidverbindung zwischen den Kammern bei Aktivierung der Kapsel durch das Applikatorglied gezielt verbunden werden können; wobei das Applikatorglied und/oder das Behältnis derart ausgeführt sind, dass das Behältnis in der Nebenkammer enthaltenes Material unter durch das Applikatorglied erzeugtem Druck abgibt,
**dadurch gekennzeichnet, dass** sich die Hauptkammer neben der Ausgabeöffnung befindet.

2. Kapsel nach Anspruch 1, wobei die Innenwand des Kapselkörperglieds eine abgestufte Konfiguration aufweist, die einen Absatz (107) in einer senkrecht zur Längsachse des Kapselkörperglieds verlaufenden Ebene bildet.

3. Kapsel nach Anspruch 2, wobei der Absatz das Innere des Kapselkörperglieds in einen ersten Teil und einen zweiten Teil unterteilt, wobei sich der erste Teil zwischen der Ausgabeöffnung und dem zweiten Teil befindet und einen kleineren Durchmesser aufweist als der zweite Teil.

4. Kapsel nach Anspruch 2 oder 3, wobei das Behältnis auf dem Absatz aufliegt.

5. Kapsel nach einem der Ansprüche 1 bis 4, wobei das Behältnis ein ringförmiges Element aufweist und zwei Folienelemente an den beiden Seiten des ringförmigen Elements am ringförmigen Element befestigt sind, um die Nebenkammer zu bilden.

6. Kapsel nach Anspruch 5, wobei der Innendurchmesser des ringförmigen Elements gleich dem Durchmesser des ersten Teils des Kapselkörperglieds ist.

7. Kapsel nach Anspruch 5 oder 6, wobei die beiden Folien an dem ringförmigen Element befestigt sind, um eine hermetisch abgedichtete Kammer zu bilden.

8. Kapsel nach Anspruch 5, 6 oder 7, wobei mindestens eine Folie des Behältnisses einen Schwächungsbereich aufweist, um das Zerreißen der Folie bei Ausüben von Druck zu erleichtern.

9. Kapsel nach einem der Ansprüche 1 bis 8, wobei das Applikatorglied ein Kolbenelement (120) und ein das Kolbenelement aufnehmendes röhrenförmiges Element (121) aufweist.

10. Kapsel nach Anspruch 9, wobei der Durchmesser des Kolbenelements gleich dem Durchmesser des ersten Teils des Kapselkörperglieds ist.

11. Kapsel nach einem der Ansprüche 1 bis 10, wobei das Applikatorglied weiterhin ein Stanzelement aufweist.

12. Kapsel nach Anspruch 11, wobei das Stanzelement eine konische Spitze (123) ist.

13. Kapsel nach einem der Ansprüche 1 bis 12, die weiterhin ein Kanülenglied (104) aufweist.

14. Kapsel nach Anspruch 13, wobei das Kanülenglied mit der Ausgabeöffnung verbunden oder integral mit dem Kapselkörperglied ausgebildet ist.

15. Kapsel nach Anspruch 14, wobei das Kanülenglied drehbar ist, um ein Abgabeventil bereitzustellen.

16. Kapsel nach einem der Ansprüche 1 bis 15, wobei die Materialien Dentalmaterialien umfassen.

17. Kapsel nach Anspruch 16, wobei die Materialien Glasionomerzemente oder kunststoffmodifizierte Glasionomerzemente sind.

18. Kapsel nach einem der vorhergehenden Ansprüche, wobei die Hauptkammer eine erste, vorzugsweise pulverförmige Komponente des Materials und die Nebenkammer eine zweite, vorzugsweise flüssige Komponente des Materials enthält.

19. Kit, der mindestens eine der Kapseln eines der vorhergehenden Ansprüche aufweist.

20. Verwendung der Kapseln nach einem der vorhergehenden Ansprüche zum Mischen eines Materials aus zwei oder mehr Komponenten.

## Revendications

1. Capsule pour le stockage, le mélange et la distribution de matériaux, comprenant:
un élément de corps de capsule (101) fournissant une chambre principale (102) et comportant une ouverture de distribution (103) à l'extrémité avant dudit élément de corps de capsule;
un réceptacle (110) comprenant deux films (111, 112) formant une chambre auxiliaire (113); ledit réceptacle étant logé dans ledit élément de corps de capsule; et
un élément d'applicateur (120) pour activer ladite capsule (100) et pour distribuer des matériaux mélangés;
ledit élément d'applicateur étant logé d'une façon coulissante dans ledit élément de corps de capsule;
ledit élément d'applicateur étant prévu à l'extrémité arrière de l'élément de corps de capsule;
ladite chambre principale et ladite chambre auxiliaire pouvant être connectées d'une façon sélective pour créer une communication de fluide entre lesdites chambres lors de l'activation de ladite capsule par ledit élément d'applicateur;
ledit élément d'applicateur et/ou ledit réceptacle étant adapté(s) de telle sorte que ledit réceptacle libère un matériau contenu dans la chambre auxiliaire sous une pression créée par ledit élément d'applicateur;
**caractérisée en ce que** ladite chambre principale est voisine de ladite ouverture de distribution.

2. Capsule selon la revendication 1, dans laquelle la paroi intérieure dudit élément de corps de capsule présente une configuration étagée formant un gradin (107) dans un plan perpendiculaire à l'axe longitudinal de l'élément de corps de capsule.

3. Capsule selon la revendication 2, dans laquelle ledit gradin divise l'intérieur dudit élément de corps de capsule en une première partie et une seconde partie, ladite première partie étant située entre ladite ouverture de distribution et ladite seconde partie et présentant un diamètre plus petit que celui de ladite seconde partie.

4. Capsule selon la revendication 2 ou 3, dans laquelle ledit réceptacle repose sur ledit gradin.

5. Capsule selon l'une quelconque des revendications 1 à 4, dans laquelle ledit réceptacle comprend un élément annulaire et deux éléments de film qui sont attachés à l'élément annulaire au niveau des deux côtés de l'élément annulaire en vue de former ladite chambre auxiliaire.

6. Capsule selon la revendication 5, dans laquelle le diamètre intérieur dudit élément annulaire est égal au diamètre de ladite première partie dudit élément de corps de capsule.

7. Capsule selon la revendication 5 ou 6, dans laquelle lesdits deux films sont attachés audit élément annulaire en vue de former une chambre hermétiquement close.

8. Capsule selon la revendication 5, 6 ou 7, dans laquelle au moins un film dudit réceptacle comprend une région affaiblie destinée à faciliter la cassure du film lors de l'application d'une pression.

9. Capsule selon l'une quelconque des revendications 1 à 8, dans laquelle ledit élément d'applicateur comprend un élément de piston (120) et un élément tubulaire (121) contenant ledit élément de piston.

10. Capsule selon la revendication 9, dans laquelle le diamètre dudit élément de piston est égal au diamètre de ladite première partie dudit élément de corps de capsule.

11. Capsule selon l'une quelconque des revendications 1 à 10, dans laquelle ledit élément d'applicateur comprend en outre un élément de poinçonnage.

12. Capsule selon la revendication 11, dans laquelle ledit élément de poinçonnage est une pointe conique (123).

13. Capsule selon l'une quelconque des revendications 1 à 12, comprenant en outre un élément de canule (104).

14. Capsule selon la revendication 13, dans laquelle l'élément de canule est connecté à ladite ouverture de distribution ou est intégralement formé avec ledit élément de corps de capsule.

15. Capsule selon la revendication 14, dans laquelle ledit élément de canule connecté peut tourner pour former une soupape de distribution.

16. Capsule selon l'une quelconque des revendications 1 à 15, dans laquelle lesdits matériaux comprennent des matériaux dentaires.

17. Capsule selon la revendication 16, dans laquelle lesdits matériaux sont des ciments ionomères de verre ou des ciments ionomères de verre modifiés à la résine.

18. Capsule selon l'une quelconque des revendications précédentes, dans laquelle ladite chambre principale contient un premier composant, de préférence poudreux, dudit matériau, et ladite chambre auxiliaire contient un deuxième composant, de préférence liquide, dudit matériau.

19. Ensemble comprenant au moins une des capsules selon l'une quelconque des revendications précédentes.

20. Utilisation des capsules selon l'une quelconque des revendications précédentes pour mélanger un matériau composé de deux composants, ou plus.
